(19) Europäisches Patentamt
European Patent Office
Office européen des brevets

(11) **EP 3 020 795 A1**

(12) **EUROPÄISCHE PATENTANMELDUNG**

(43) Veröffentlichungstag:
**18.05.2016 Patentblatt 2016/20**

(51) Int Cl.:
***C12C 7/20*** *(2006.01)* ***C12C 7/22*** *(2006.01)*
***C12C 13/08*** *(2006.01)*

(21) Anmeldenummer: **15192246.5**

(22) Anmeldetag: **30.10.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **11.11.2014 DE 102014116471**

(71) Anmelder: **Krones AG**
**93073 Neutraubling (DE)**

(72) Erfinder:
• **Gorbunov, Karl**
**93073 Neutraubling (DE)**

• **Kammerloher, Helmut**
**93073 Neutraubling (DE)**
• **Friedrich, Michael**
**93073 Neutraubling (DE)**
• **Wetzl, Christian**
**93073 Neutraubling (DE)**
• **Smolka, Gregor**
**93073 Neutraubling (DE)**

(74) Vertreter: **Grünecker Patent- und Rechtsanwälte PartG mbB**
**Leopoldstraße 4**
**80802 München (DE)**

(54) **VERFAHREN UND VORRICHTUNG ZUM WÜRZEKOCHEN**

(57) Die Erfindung betrifft ein Verfahren und eine Vorrichtung zum Würzekochen, wobei die Würze mit einer ersten Heizeinrichtung erhitzt wird und während des Würzekochens die Würze zusätzlich durch einen Läuterwürzer erhitzt wird. Dazu ist eine Zirkulationsleitung vorgesehen, über die der Würzepfanne Würze entnommen werden kann und die mit dem Läuterwürzeerhitzer verbunden ist, derart, dass zumindest ein Teilstrom der entnommenen Würze in den Läuterwürzeerhitzer zum Erwärmen geleitet und dann in die Würzepfanne zurückgeleitet werden kann.

FIG. 1

EP 3 020 795 A1

**Beschreibung**

Die Erfindung betrifft ein Verfahren und eine Vorrichtung zum Würzekochen gemäß den Oberbegriffen der Ansprüche 1 und 4.

Bei der Bierherstellung ist im Sudhausprozess das Würzekochen ein wesentlicher Prozessschritt. Die gewonnene Würze wird über eine bestimmte Zeit gekocht. Dazu wird nach dem Stand der Technik zum Heizen der Würze ein Heizmedium von > 120 °C bereitgestellt. Dieses Heizmedium kann dabei sowohl Dampf als auch Hochdruckheißwasser sein. Die hohen Heizmediumtemperaturen werden benötigt, damit während des Aufheizens und des Kochens der Würze (Verdampfung) ein ausreichend hoher Wärmestrom erzielt werden kann. Andere Wärmeverbraucher im Sudhaus können auch mit einem Heizmedium auf deutlich niedrigerem Temperaturniveau betrieben werden. Möchte man auch zum Würzekochen einen Wärmeträger mit einer Temperatur $\leq$ 120 °C verwenden, kann der notwendige Wärmestrom nur durch eine vergrößerte Heizfläche erreicht werden. Es gilt allgemein:

$$\text{Wärmestrom} = k * A * \Delta\vartheta$$

k = Wärmedurchgangskoeffizient [W/(m$^2$K)]

A = Wärmeübertragungsfläche (des Kochers bzw. Kochsystems)

$\Delta\vartheta$ = Temperaturdifferenz = Mittlere logarithmische Temperaturdifferenz zwischen Heizmedium und Produkt.

Der Wärmedurchgangskoeffizient k ist dabei weitestgehend konstant und kann nur geringfügig beeinflusst werden. Wird jedoch die Temperaturdifferenz beispielsweise reduziert, muss, um einen gleichen Wärmestrom zu gewährleisten, im Gegenzug die Wärmeübertragungsfläche vergrößert werden. Allerdings wird man hier immer bestrebt sein, diese Fläche konstruktiv sowohl aus Platzgründen als auch aus Kostengründen nicht zu groß zu wählen. Stattdessen wird die Temperatur des Heizmediums so gewählt, dass die Heizfläche eine wirtschaftlich vertretbare Größe aufweist. Zusätzlich darf auch der benötigte Verrohrungsaufwand und die gesamte Peripherie nicht vernachlässigt werden. Bei einem bestehenden Sudhaus ist somit bisher eine Absenkung der Heizmitteltemperatur nicht ohne erheblichen Aufwand zu bewerkstelligen. Hiervon ausgehend liegt der vorliegenden Erfindung die Aufgabe zugrunde, ein Verfahren und eine Vorrichtung zum Würzekochen bereitzustellen, die auf einfache und kostengünstige Art und Weise ermöglichen, die Temperatur des Heizmediums für eine Heizeinrichtung zum Kochen von Würze deutlich zu senken.

Erfindungsgemäß wird diese Aufgabe durch die Merkmale der Ansprüche 1 und 4 gelöst.

Gemäß der vorliegenden Erfindung wird während des Würzekochens die Würze zusätzlich durch einen Läuterwürzeerhitzer erhitzt. Dieser Läuterwürzeerhitzer ist in konventionellen Sudhäusern zumeist bereits vorhanden. Dieser Läuterwürzeerhitzer, der insbesondere als Plattenwärmetauscher ausgebildet ist, wird bislang dazu verwendet, um die Würze, welche beispielsweise aus einem Vorlauftank zugeleitet wird zu erhitzen, bevor sie in die Würzepfanne geleitet wird, um dort von der ersten Heizeinrichtung gekocht zu werden. Während des Würzekochens, also dem Schritt bei dem die bereits vom Läuterwürzeerhitzer vorerhitzte und in die Würzepfanne geleitete Würze auf Kochtemperatur (100 °C) gebracht wird und anschließend über einen bestimmten Zeitraum gekocht und teilweise verdampft wird war dieser Wärmetauscher nicht in Betrieb.

Durch die zusätzliche Nutzung des bestehenden Wärmetauschers als zweite Heizeinrichtung fallen nur geringe Kosten zur Anbindung in den Kocherkreislauf an. Es muss keine zusätzliche Heizfläche in das System integriert werden, wenn Heizmedien mit niedriger Temperatur verwendet werden. Somit kann vorteilhafterweise der Läuterwürzeerhitzer, der ansonsten während des Würzekochens außer Betrieb ist, sinnvoll zur Vergrößerung der Heizfläche beitragen. Dazu ist bei einer erfindungsgemäßen Vorrichtung eine Zirkulationsleitung vorgesehen, über die der Würzepfanne Würze entnommen werden kann und die mit dem Läuterwürzeerhitzer verbunden ist, derart, dass zumindest ein Teilstrom der entnommenen Würze in den Läuterwürzeerhitzer zum Erwärmen geleitet und dann in die Würzepfanne zurückgeleitet und/oder der ersten Heizeinrichtung zugeführt werden kann.

Die Verwendung des Läuterwürzeerhitzers zum Würzekochen ermöglicht, dass die Heizmediumtemperatur gesenkt werden kann, insbesondere auf $\leq$ 120 °C, vorzugsweise auf eine Temperatur in einem Bereich von 105 bis 120 °C. Durch eine Absenkung der Heizmedientemperatur im Sudhaus einer Brauerei auf $\leq$ 120 °C werden zum Einen die Abstrahlverluste und zum Anderen auch die Bereitstellungsverluste reduziert. Ein wesentlicher Vorteil liegt auch darin, dass alternative Konzepte zur Bereitstellung thermischer Energie im Sudhaus realisiert werden können. Zu nennen sind hier neben Blockheizkraftwerken und Gasturbinen/Mikrogasturbinen auch Sonnenkollektoren zur Heizwasser- bzw. Prozesswärmeerzeugung, aber auch nutzbare Motorenabwärme sowie Kompressorenabwärme. Die vorliegende Erfindung erlaubt, Wärmeenergie aus den zuvor genannten alternativen Wärmequellen zu verwenden, die das Heizmedium in der Regel nicht effizient auf ein sehr hohes Temperaturniveau von T > 120 °C bringen können. Die aus diesen Systemen gewonnene Energie kann beispielsweise über einen Puffertank für das Heizmedium bereitgestellt werden. Als Heizmedium kann sowohl Prozesswasser, aber auch Brauwasser mit einer Temperatur über 100 °C verwendet werden. Es ist auch möglich, andere Heizmedien, wie beispielsweise Thermoöle, insbesondere hochtemperaturbeständige Thermoöle zu verwenden.

Besonders vorteilhaft an dieser Erfindung ist, dass die Erfindung nicht nur für Neubauten verwendet werden kann, sondern in ganz einfacher und kostengünstiger Art und Weise durch einfachen Einbau einer Zirkulationsleitung und der entsprechenden Armaturen in bestehende Anlagen realisiert werden kann. Selbst wenn in bestehenden Vorrichtungen kein Läuterwürzeerhitzer vorhanden ist, kann dieser kostengünstig und einfach mit den beiden Funktionen Aufheizen und Kochunterstützung nachgerüstet werden.

Gemäß einer bevorzugten Ausführungsform wird die Würze der Würzepfanne entnommen und zumindest ein erster Teilstrom dem Läuterwürzeerhitzer zugeführt und erhitzt, und dann entweder direkt oder über die erste Heizeinrichtung in die Würzepfanne zurückgeführt. Bei dieser Lösung können beispielsweise die bereits bestehenden Anstiche im Boden der Würzepfanne, die dazu dienen, Würze abzuleiten, und über eine Würzeumwälzpumpe erneut der ersten Heizeinrichtung zuzuführen um die Würze umzuwälzen, verwendet werden.

Es ist vorteilhaft wenn die Vorrichtung eine entsprechende Pumpe, insbesondere Würzeumwälzpumpe oder eine Läuterwürzepumpe aufweist, die die Würze durch die Zirkulationsleitung zum Läuterwürzeerhitzer fördert wobei vorteilhafterweise die Pumpe über die Zirkulationsleitung mit einem Ein- oder Auslass des Läuterwürzeerhitzers verbunden ist. In vorteilhafter Weise kann hier die in bestehenden Systemen bereits vorhandene Würzeumwälzpumpe verwendet werden, um die Würze in dem Läuterwürzeerhitzer zu pumpen.

Gemäß einer bevorzugten Ausführungsform ist eine Ventilanordnung in der Zirkulationsleitung vorgesehen, über die die aus der Würzepfanne entnommene Würze entweder zum Läuterwürzeerhitzer geleitet werden kann und/oder zur ersten Heizeinrichtung. Das bedeutet, dass von der Zirkulationsleitung eine Leitung abzweigt, die zurück zur ersten Heizeinrichtung führt. Das heißt, dass das Verrohrungssystem einerseits dazu verwendet werden kann, um Würze aus der Würzepfanne zu entnehmen und im Kreislauf erneut der ersten Heizeinrichtung zuzuführen und gleichzeitig oder alternativ dazu verwendet werden kann, die Würze zum Läuterwürzeerhitzer zu pumpen. Es sind keine weiteren Anstiche zur Entnahme für Würze, die dem Läuterwürzeerhitzer zugeführt werden soll, nötig. Das heißt, die Erfindung kann einfach in bestehende Systeme integriert werden. Darüber hinaus kann über die Ventilanordnung das Verhältnis zwischen dem Anteil, der zurück zur ersten Heizeinrichtung geleitet wird, und dem Anteil, der dem Läuterwürzeerhitzer zugeführt wird, eingestellt werden.

Die erste Heizeinrichtung ist dabei eine Heizung aus folgender Gruppe: Innenkocherheizung, Außenkocherheizung, Bodenheizung, Zargenheizung. Als Zargenheizung oder Bodenheizung werden vorzugsweise Heizungen verwendet, die in Bezug auf die Würzepfanne nach innen ( also in Kontakt mit der Würze) gerichtete Unebenheiten, d. h. über die Fläche in Horizontal -und Vertikalrichtung regelmäßig verteilte Wölbungen, aufweisen, d. h. insbesondere als sogenannte Dimpleplates oder Pillowplates ausgebildet sind. Vorteilhafterweise ist die erste Heizeinrichtung eine Zargenheizung, insbesondere mit nach innen gewandten Unebenheiten. Die Vorrichtung weist weiter einen Tangentialeinlass auf, über den die Würze tangential auf die Innenwandung der Zargenheizung eingebracht werden kann, wobei vorzugsweise entweder der Tangentialeinlass mit der Zirkulationsleitung verbunden ist und/oder mit einer Leitung, die Würze aus der Würzepfanne entnimmt und über die Würzeumwälzpumpe vor dem ersten Läuterwürzeerhitzer der ersten Heizeinrichtung rückführt, also ohne die Würze zusätzlich durch den Läuterwürzeerhitzer zu erwärmen. Dadurch, dass die Würze durch einen Tangentialeinlass eingeleitet wird, wird die Würze auf eine Bahn entlang der hohlzylindrischen Oberfläche der Zargenheizung gezwungen und strömt in abwärts gerichteten Bahnen in der Würzepfanne nach unten, derart, dass eine Drehströmung der Würze in der Würzepfanne entsteht. Dadurch, dass die Würze über die Unebenheiten, die sowohl in Vertikal- als auch in Horizontalrichtung angeordnet sind, strömt, entstehen Mikrozirkulationen im Bereich der Unebenheiten, was Fouling verhindert und somit den k-Wert der Heizfläche verbessert. Darüber hinaus vergrößert sich die Heizfläche durch die Unebenheiten. Somit kann durch Vergrößerung der Heizfläche und durch Verhinderung von Fouling und somit einem verbesserten k-Wert der Wärmestrom wirksam verbessert werden, wobei durch das geschickte tangentiale Einleiten das Rührwerk wegfallen kann.

Die Würze bewegt sich dabei an der Innenwandung der Zargenheizung mit einer Geschwindigkeit $\geq 0,5$ m/s, vorzugsweise > 2 m/s, bis zu 7 m/s.

Wenn doch ein Rührwerk zusätzlich verwendet wird, kann die Durchmischung und Rotationsbewegung noch zusätzlich verbessert werden. Die Drehrichtung des Rührwerks sollte dann jedoch vorzugsweise der Drehrichtung der Würze, die durch den Tangentialeinlass verursacht wird, entsprechen.

Vorteilhafterweise ist in der Zirkulationsleitung eine zweite Ventilanordnung vorgesehen, derart, dass der Läuterwürzeerhitzer in zwei Strömungsrichtungen mit Würze beschickbar ist. Vorzugsweise ist der Läuterwürzeerhitzer auch auf der Heizmediumseite mit heißem Heizmedium in zwei Strömungsrichtungen beschickbar. Durch Ändern der Strömungsrichtung insbesondere auf der Würzeseite kann ein Verschmutzen, insbesondere Fouling an den Wärmetauscherflächen wirksam reduziert werden. Die Reinigungszyklen können verlängert werden.

Vorteilhafterweise ist die erste Heizeinrichtung als Plattenwärmetauscher, insbesondere als Außenkocher ausgebildet. Plattenwärmetauscher bringen den Vorteil von geringen Investitionskosten, geringem Platzbedarf, vereinfachter Wartung, hohen k-Wert, effizienten Einsatz bei Niedertemperaturheizmedien ≤ 120 °C, vorzugsweise < 110 °C mit sich.

Es ist besonders vorteilhaft, wenn auch der Plattenwärmetauscher in zwei Strömungsrichtungen mit Würze beschickbar ist, was durch eine entsprechende Verrohrung mit entsprechenden Ventilen einfach zu realisieren ist. Wenn ein Plattenwärmetauscher immer in der selben Strömungsrichtung gefahren wird, können sich Feststoffpartikel von Sud zu Sud immer mehr festsetzen und die freie Durchgangsfläche und somit auch die Heizfläche reduzieren, wodurch die Heizleistung abnimmt und eine Zwischenreinigung notwendig wird. Gemäß der Erfindung wird nun die Strömungsrichtung durch den Plattenwärmetauscher gewechselt, wobei bei jedem Sud die Richtung gewechselt werden kann, jedoch auch ein Wechsel während eines Sudes möglich ist.

Vorteilhafterweise ist eine Einrichtung zum Zudosieren von Hopfen derart angeordnet, dass der Hopfen in Strömungsrichtung nach dem Plattenwärmetauscher zudosiert wird, d. h. das Hopfengefäß mit dem Hopfen mit der Rücklaufleitung zur Würzepfanne verbunden ist, d.h. zwischen dem Auslauf des Plattenwärmetauschers und der Würzepfanne. Bei wechselnder Strömungsrichtung der Würze durch den Plattenwärmetauscher ist ein weiterer Anschluss vorgesehen, der es ebenfalls ermöglicht, den Hopfen in dem Rücklauf zur Würzepfanne durch Schalten entsprechender Ventile zuzudosieren. Dass der Hopfen im Rücklauf zur Würzepfanne zudosiert wird, bringt den Vorteil mit sich, dass verhindert werden kann, dass die Plattenwärmetauscher durch Feststoffe wie beispielsweise durch die ungelösten Hopfenpellets in konzentrierter Form zu schnell zusetzen. Da die Hopfenpellets dann zunächst erst in die Würzepfanne geleitet werden, können sich diese vollständig auflösen und es kann verhindert werden, dass Hopfenpellets in konzentrierter Form in dem Plattenwärmetauscher gelangen. Die Dosage des vorgelösten Hopfens in die Würzeleitung nach dem Plattenwärmetauscher ist somit besonders vorteilhaft. Somit wird zugleich die höhere Temperatur im Auslauf des Plattenwärmetauschers für eine bessere Isomerisierung genutzt.

Es ist vorteilhaft, wenn die Vorrichtung Anschlüsse für eine CIP-Reinigung aufweist, wobei insbesondere CIP-Medium in die Würzepfanne vorgelegt werden kann, und zwischen der ersten Heizeinrichtung, insbesondere dem Plattenwärmetauscher, und Würzepfanne im Kreislauf zirkulieren kann, bevor es abgeführt wird.

Es ist auch möglich, dass die Anschlüsse derart vorgesehen sind, dass während der Produktion eine separate Außenkocherzwischenreinigung stattfinden kann. Die CIP-Anschlüsse über die das CIP-Medium zu und abgeleitet werden kann, sind dabei mit der Würzevorlaufleitung und der Würzerücklaufleitung verbunden.

Zum Umschalten der Strömungsrichtung durch den Plattenwärmetauscher sind mehrere Regelventile und/oder Regelklappen angeordnet, insbesondere derart, dass beim Umschalten der Volumenstrom der Würze oder des Heizmediums, der zu einem ersten Anschluss des Plattenwärmetauschers geleitet wird sukzessive reduziert werden kann bis er zum Erliegen kommt und der Volumenstrom statt dessen sukzessive über eine Bypassleitung am Plattenwärmetauscher vorbei geleitet werden kann und anschließend der Volumenstrom in der Bypassleitung sukzessive reduziert werden kann bis er zum Erliegen kommt und stattdessen der Volumenstrom sukzessive zum anderen Anschluss des Plattenwärmetauschers geleitet werden kann.

Durch die Verwendung von Regelventilen- bzw. klappen kann der Würze- oder Heizmediumstrom durch den Plattenwärmetauscher allmählich reduziert werden, so dass eine Schädigung des Systems vermieden werden kann und der Volumenstrom allmählich auf einen Bypass umgeleitet werden kann. Durch den Bypass muss beim Richtungswechsel die Pumpe die die Würze oder das Heizmedium zum Plattenwärmetauscher fördert nicht abgeschaltet werden. Ein sanftes Umschalten ist möglich.

Die Erfindung wird nachfolgend unter Bezugnahme folgender Figuren näher erläutert:

Fig. 1 zeigt grob schematisch eine Vorrichtung zum Würzekochen gemäß der vorliegenden Erfindung.

Fig. 2 zeigt grob schematisch eine Verrohrung für den Läuterwürzeerhitzer zur wechselseitigen Beschickung gemäß einer bevorzugten Ausführungsform der vorliegenden Erfindung.

Fig. 3 zeigt grob schematisch eine weitere Ausführungsform gemäß der vorliegenden Erfindung.

Fig. 4 zeigt eine perspektivische Darstellung der Heizfläche der ersten Heizeinrichtung gemäß einer besonderen Ausführungsform der vorliegenden Erfindung.

Fig. 5 zeigt einen Teillängsschnitt durch die in Fig. 4 gezeigte Heizung.

Fig. 6 zeigt einen Querschnitt durch Würzepfanne mit der in Fig. 4 und 5 gezeigten Heizung.

Fig. 7 zeigt grob schematisch eine weitere Ausführungsform gemäß der vorliegenden Erfindung mit einem Plattenwärmetauscher als erste Heizeinrichtung.

Fig. 8 zeigt das in Fig. 7 gezeigte Ausführungsbeispiel mit einem Wasseranschluss zum Ausschieben.

Fig. 9 zeigt das in Fig. 7 gezeigte Ausführungsbeispiel mit Anschlüssen für die CIP-Reinigung.

Fig. 10     zeigt das in Fig. 7 gezeigte Ausführungsbeispiel mit einem Hopfendosagegefäß.

Fig. 11     zeigt grob schematisch einen Tangentialeinlass für eine Vorrichtung gemäß der vorliegenden Erfindung.

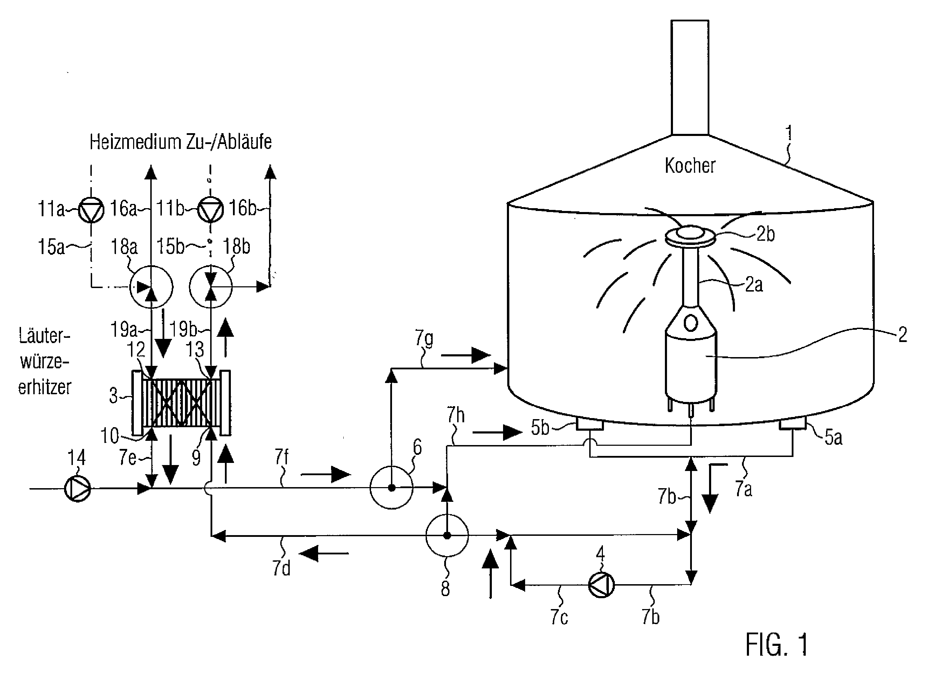

Fig. 1 zeigt grob schematisch eine Ausführungsform gemäß der vorliegenden Erfindung. Die kleinen Pfeile in den Leitungsabschnitten zeigen mögliche Strömungsrichtungen. Fig. 1 zeigt die Vorrichtung einfachheitshalber nur grob schematisch ohne Armaturen. Die Würzepfanne 1 ist hier nur vereinfacht dargestellt und weist z. B. einen hohlzylindrischen Behälter auf, in dem in diesem Ausführungsbeispiel die erste Heizeinrichtung 2 angeordnet ist. Die erste Heizeinrichtung 1 ist hier als Innenkocher, z.B. als Rohrbündelwärmetauscher, ausgebildet und weist in bekannter Weise ein Würzesteigrohr 2a auf, sowie eine Verteilereinrichtung 2b, die beispielsweise die Würze über einen Schirm 2b in der Würzepfanne 1 verteilt.

Der Innenkocher ist nur ein Beispiel für eine erste Heizeinrichtung 2. Die erste Heizeinrichtung 2 kann beispielsweise auch eine Außenkocherheizung, eine Bodenheizung, Zargenheizung etc. sein.

Weiter weist die Vorrichtung eine zweite Heizeinrichtung 3 auf. In diesem Ausführungsbeispiel ist die zweite Heizeinrichtung ein Läuterwürzeerhitzer 3. Der Läuterwürzeerhitzer 3 ist vorteilhafterweise als Plattenwärmetauscher ausgebildet. Die Vorrichtung ist auch nicht auf eine erste und zweite Heizeinrichtung beschränkt, sondern kann zumindest eine weitere zusätzliche Heizeinrichtung aufweisen.

Die zweite Heizeinrichtung 3 weist auf der Heizmediumseite einen Zulauf 12 für Heizmedium, sowie einen Ablauf 13 für Heizmedium auf. Die Vorrichtung umfasst vorteilhafterweise ein Verrohrungssystem mit entsprechenden Ventilen, das ermöglicht, dass der Läuterwürzeerhitzer 3 mit heißem Heizmedium in zwei Strömungsrichtungen beschickbar ist. Dies kann beispielsweise so realisiert werden, dass eine Zuführleitung 15a (strichgepunktete Leitung) mit einer Pumpe 11a für heißes Heizmedium vorgesehen ist und über eine Ventileinrichtung, beispielsweise ein Dreiwegeventil 18a mit einer Leitung für kaltes Heizmedium 16a und einer Zuführleitung 19a zum Anschluss bzw. Zulauf 12 der zweiten Heizeinrichtung 3, verbunden ist. Die Ventileinrichtung 18a kann nun wahlweise so geschaltet werden, dass entweder heißes Heizmedium über die Leitung 15a, 19a dem Anschluss d. h. Zulauf 12 zugeführt werden kann, oder aber aus dem Anschluss 12 abgekühltes Heizmedium über die Leitung 19a und 16a abgeleitet wird. Dann ist der Anschluss 12 der Ablauf der zweiten Heizeinrichtung 3.

Entsprechendes gilt für den Ablauf 13 der zweiten Heizeinrichtung 3. Die Ventileinrichtung 18b kann entweder so geschaltet werden, dass über den Ablauf 13 abgekühltes Heizmedium über die Leitungen 19b, 16b abgeführt wird, oder aber heißes Heizmedium über die Leitung 15b und 19b über den Anschluss 13, der dann als Zulauf fungiert, zugeführt werden kann.

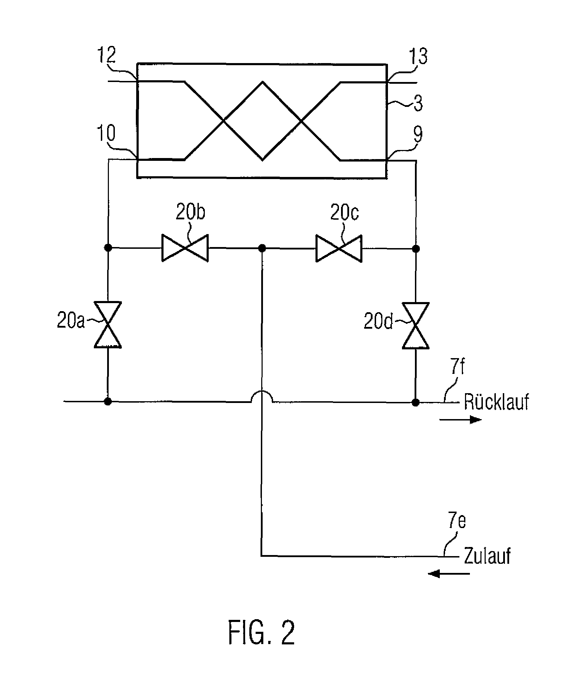

Die Verrohrung und Anordnung von Ventilen ist hier nur beispielhaft. Wesentlich ist lediglich, dass der Plattenwärmetauscher 3 in zwei entgegengesetzten Strömungsrichtungen mit Heizmedium beschickbar ist. Die zweite Wärmetauschereinrichtung 3 soll auch auf der Würzeseite in zwei Strömungsrichtungen mit Würze beschickbar sein. Es könnte eine Anordnung, wie in Fig. 1 gezeigt ist, gewählt werden, jedoch auch beispielsweise die in Fig. 2 gezeigte Anordnung, die die zweite Wärmetauschereinrichtung 3 zeigt mit einem Anschluss 9 und einem Anschluss 10. In Fig. 2 ist der Rücklaufleitungsabschnitt 7f, gezeigt, über diesen Leitungsabschnitt fließt die erwärmte Würze zurück in Richtung Würzepfanne 1. Weiter ist der Vorlauf- bzw. Zuleitungsabschnitt 7e erkennbar, über den Würze aus der Würzepfanne 1 der zweiten Heizeinrichtung 3 zugeleitet wird. Durch Schalten der Ventile 20a, b, c, d kann die Würze über den Zulauf 7e wahlweise dem Anschluss 9 oder 10 zugeführt werden und über den entsprechenden anderen Anschluss über die Leitung 7f rückgeführt werden. Bei geöffnetem Ventil 20b und geschlossenem Ventil 20c und 20a kann die Würze über den Zulauf 10 dem Wärmetauscher 3 zugeführt werden, und über den Ablauf 9 bei geöffnetem Ventil 20d abgeleitet werden. Eine entsprechende Anordnung von Ventilen und Leitungen könnte auch auf der Heizmediumseite angeordnet werden.

In der Fig. 1 sind die einzelnen Ventile einfachheitshalber nicht eingezeichnet. Wie es herkömmlicherweise der Fall ist, weist die Vorrichtung eine Umwälzpumpe 4 auf, um die Würze im Kreislauf durch die erste Heizeinrichtung 2 zu führen. Dabei ist mindestens eine Entnahmestelle, hier jeweils zwei Entnahmestellen 5b und 5a vorgesehen, wobei Würze über die Leitung 7a, 7b über die Pumpe 4 in den Leitungsabschnitten 7c, 7h zurück zur ersten Heizeinrichtung 2 im Kreislauf gepumpt werden kann. Dabei ist eine Ventilanordnung 8, beispielsweise ein Drei-Wegeventil vorgesehen, um zu ermöglichen, dass zumindest ein Teil der entnommenen Würze der ersten Heizeinrichtung 2 zurückgeführt wird. Gemäß der vorliegenden Erfindung kann Würze aus der Würzepfanne 1 zusätzlich über die zweite Heizeinrichtung 3 erwärmt werden. Dabei könnte die Würze über einen separaten Anstich entnommen werden. Vorteilhafterweise jedoch können die Entnahmestellen 5a und 5b dazu verwendet werden. Die Vorrichtung weist eine Zirkulationsleitung auf, über die der Würzepfanne 1 Würze entnommen werden kann, und die mit der zweiten Heizeinrichtung 3 hier mit dem Läuterwürzeerhitzer verbunden ist, derart, dass zumindest ein Teilstrom der entnommenen Würze in die zweite Heizeinrichtung 3 zum Erwärmen geleitet wird und dann in die Würzepfanne 1 zurückgeleitet wird. Das heißt, dass über die Ventilanordnung 8 die Würze beispielsweise entweder über die Leitung 7h der ersten Heizeinrichtung 2 vollständig zugeführt werden, oder aber vollständig der Leitung 7d zur zweiten Heizeinrichtung 3 oder aber dass zumindest ein Teil der entnommenen Würze der zweiten Heizeinrichtung 3 zuführbar ist und ein anderer Teil über die Leitung 7h der ersten Heizeinrichtung 2 zugeführt wird oder direkt in die Würzepfanne 1 (beispielsweise über Leitung 7g).

Die Zirkulationsleitung weist hier, wie durch die großen Pfeile deutlich wird, den Leitungsabschnitt 7a, über den die Würze der Würzepfanne 1 entnommen wird, Leitungsabschnitt 7b der zur Würzeumwälzpumpe 4 führt, auf, und weiter den Leitungsabschnitt 7c vor der Ventileinrichtung 8, den Leitungsabschnitt 7d, nach der Ventilanordnung 8, die dann zum Zulauf 9 der zweiten Heizeinrichtung 3 führt. Weiter weist die Zirkulationsleitung den Leitungsabschnitt 7e auf, der vom Ablauf 10 der zweiten Heizeinrichtung 3 abzweigt, den Leitungsabschnitt 7f. Dann kann beispielsweise die Zirkulationsleitung den Abschnitt 7g aufweisen, der die erhitzte Würze direkt in die Würzepfanne 1 einbringt. Alternativ kann die Zirkulationsleitung auch weiter den Abschnitt 7h umfassen, so dass erhitzte Würze zu der ersten Heizeinrichtung 2 zurückgeführt werden kann. Über eine Ventileinrichtung 6 kann dann die heiße Würze entweder der Leitung 7g oder der Leitung 7h zugeführt werden, oder aber ein Teil der Leitung 7g und ein Teil der Leitung 7h.

Wenn auch nicht dargestellt kann auch eine Läuterwürzepumpe so angeordnet werden, dass sie Würze durch die Zirkulationsleitung pumpt. Die Verrohrung, die in Fig. 1 gezeigt ist, ist nur beispielhaft. Wesentlich ist lediglich, dass Würze, die der Würzepfanne 1 entnommen wird, zusätzlich zu der ersten Heizeinrichtung 2 auch von einer zweiten Heizeinrichtung 3, hier vorteilhafterweise dem Läuterwürzeerhitzer 3, erwärmt wird und entweder direkt und/oder über die erste Heizeinrichtung 2 zurückgeführt wird.

Bei dieser Anordnung kann ein Heizmedium verwendet werden, das eine relativ niedrige Temperatur ≤ 120 °C, vorzugsweise in einem Bereich von 105 bis 120 °C aufweist. Vorzugsweise ist das Heizmedium Heißwasser, jedoch kann auch ein Thermoöl, insbesondere ein temperaturstabiles Thermoöl, verwendet werden.

Bei einem erfindungsgemäßen Verfahren wird während des Würzekochens die Würze von der ersten Heizeinrichtung 2 erwärmt und zusätzlich von der zweiten Heizeinrichtung 3 in Form des Läuterwürzeerhitzers 3, erhitzt. Das Würzekochen entspricht einem Schritt bei dem die bereits vom Läuterwürzeerhitzer 3 vorerhitzte und in die Würzepfanne 1 geleitete Würze auf Kochtemperatur (100°C) gebracht wird und anschließend über einen bestimmten Zeitraum gekocht und teilweise verdampft wird.

Bei dem Einleiten der Würze in die Würzepfanne 1 wird die Würze von der Pumpe 14 beispielsweise aus einem Puffertank gepumpt. Dabei wird, wie herkömmlicherweise bekannt ist, die Würze beispielsweise über den Läuterwürzeerhitzer 3 vorerhitzt bevor sie in die Würzepfanne eingeleitet wird - beispielsweise auf eine Temperatur von 90 bis auf Siedetemperatur. Das Heizmedium im Läuterwürzeerhitzer hat dabei beispielsweise eine Temperatur in einem Bereich von 92 bis 105. Der komplette Sud wird dann in die Würzepfanne 1, beispielsweise über die Leitung 7f und 7g, eingelagert. Beim Würzekochen wird die Würze mehrere Male pro Stunde umgewälzt. Dabei wird, gemäß der vorliegenden Erfindung, die Würze über die erste 2 und zweite Heizeinrichtung 3 geleitet. Ein Teil der Würze, die der Würzepfanne 1 entnommen wurde, kann auch im Kreislauf wieder der ersten Heizeinrichtung 2 beispielsweise über die Leitungsabschnitte 7a, b, c, d und h zurückgeführt werden. Die Ventilanordnung 8 wird dabei entsprechend eingestellt.

Die Heizmedientemperatur in der ersten Heizeinrichtung kann dabei ≤ 120 °C, vorzugsweise 105 bis 120 °C aufweisen.

Um während des Kochprozesses ein Verschmutzen und Zusetzen der zweiten Heizeinrichtung 3 zu verhindern, kann wie zuvor beschrieben, die Strömungsrichtung der Würze in der zweiten Heizeinrichtung 3 geändert werden, und/oder auch die Strömungsrichtung des Heizmediums. Die Strömungsrichtung kann dabei während des Kochens eines Sudes geändert werden, oder aber zwischen zwei Suden. Dadurch, dass in effektiver Weise die Heizflächen des Läuterwürzeerhitzers 3 zusätzlich zur ersten Heizeinrichtung 2 verwendet werden können, ergibt sich im gesamten System eine vergrößerte Wärmeübertragungsfläche und somit auch bei niedrigen Heizmediumtemperaturen ein ausreichender Wärmestrom. Somit können auch alternative Konzepte zur Bereitstellung thermischer Energie im Sudhaus realisiert werden. Zu nennen sind hier neben Blockheizkraftwerken und Gasturbinen/Mikrogasturbinen auch Sonnenkollektoren zur Heizwasser- bzw. Prozesswärmeerzeugung, aber auch nutzbare Motorenabwärme sowie Kompressorenabwärme. Diese Energie kann beispielsweise über einen Puffertank bereitgestellt werden. Da neben einer erste Heizvorrichtung 2 und einer Würzepfanne 1 zumeist ein Läuterwürzeerhitzer 3 bereits in bestehenden Systemen vorhanden ist, kann die Erfindung einfach durch Nachrüsten einer Zirkulationsleitung mit entsprechenden Ventilen realisiert werden, so dass kein erhöhter Platzbedarf entsteht und die Nachrüstkosten sehr gering sind. Als Läuterwürzeerhitzer 3 in diesem Ausführungsbeispiel kann auch ein Freistromwärmetauscher verwendet werden. Der Läuterwürzeerhitzer 3 kann auch mit einem Wärmespeicher verbunden sein und seine Energie durch Abwärme (z. B. vom Würzekühler und Pfannendunstkondensator) erhalten. Das abgekühlte Heizmedium kann dann über die entsprechenden Leitungen 16a oder 16b wieder zurück in den Wärmespeicher geführt werden.

Es ist auch möglich, dass die Strömungsrichtung im Läuterwürzeerhitzer 3 bei der Würzekochung gegenläufig zur Strömungsrichtung bei der Läuterwürzeerhitzung vor dem eigentlichen Würzekochprozess ist.

Insbesondere wenn als erste Heizeinrichtung nicht der Innenkocher 2 verwendet wird, sondern beispielsweise eine Zargenheizung und/oder Bodenheizung, oder ein Außenkocher, kann vorzugsweise ein zusätzliches nicht dargestelltes Rührwerk z.B. im Bodenbereich vorgesehen sein.

Die Würze wird wie beschrieben mit der ersten und zweiten Heizeinrichtung 2, 3 (indem die zweite Heizeinrichtung 3 zumindest zeitweise zumindest einen Teilstrom der abgezogenen Würze erhitzt) auf Kochtemperatur, beispielsweise 100°C auf Meereshöhe gebracht und über eine bestimmte Zeit z. B. 60 Minuten gekocht. Somit kann die zweite Heizeinrichtung 3 die erste Heizeinrichtung 2 unterstützen. Die fertige Würze kann über einen nicht dargestellten Anschluss abgeleitet werden

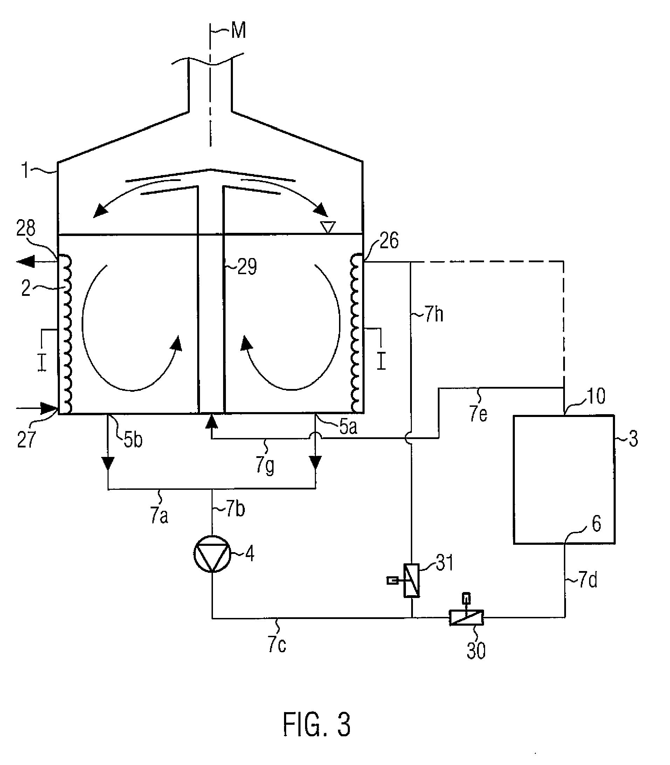

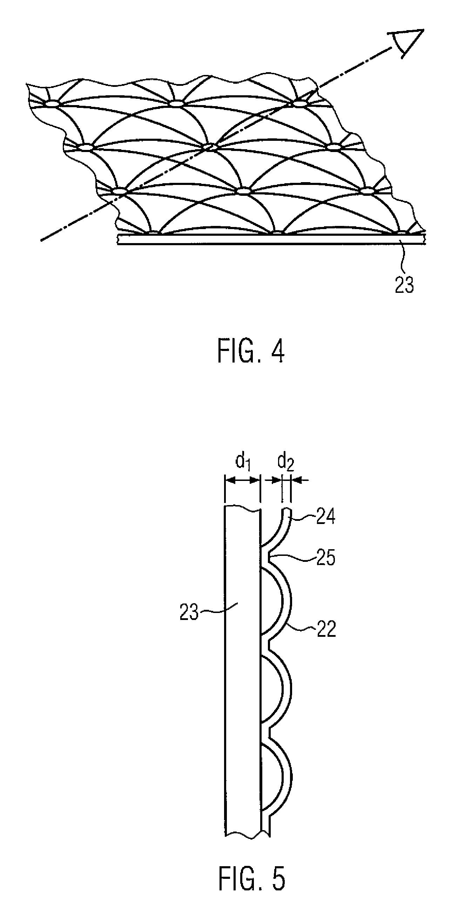

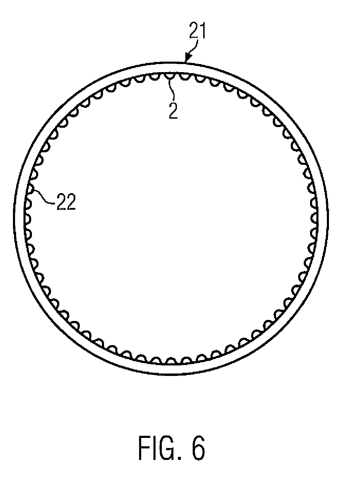

Fig. 3 zeigt eine weitere Ausführungsform gemäß der vorliegenden Erfindung. Das Ausführungsbeispiel entspricht dabei im Wesentlichen dem ersten Ausführungsbeispiel, wobei gleiche Teile mit gleichen Bezugszeichen versehen sind. Bei diesem Ausführungsbeispiel ist die erste Heizeinrichtung 2 als Zargenheizung ausgebildet, und erstreckt sich zumindest über einen Teil der Höhe. Die Heizung kann auch durch mehrere in Umfangsrichtung nebeneinander angeordnete Teilabschnitte gebildet sein. Vorzugsweise ist die Heizung ebenfalls hohlzylindrisch ausgebildet. Fig. 6 zeigt einen Schnitt entlang der Linie I-I in Fig. 3. Wie aus den Fig. 4 bis 6 hervorgeht, ist die Seitenwandung 21 der Würzepfanne 1 zumindest abschnittsweise doppelwandig ausgebildet und weist eine Außenwandung 23 und eine Innenwand 24 als Heizfläche auf, wobei die Stärke d1 der Außenwand stärker ist als die Stärke d2 der Innenwand. Die beiden Wandungen sind miteinander an einer Vielzahl von Verbindungsstellen 25, z. B. durch Schweißen, verbunden, so dass Unebenheiten 22 zwischen den Verbindungsstellen entstehen. Die Unebenheiten haben beispielsweise die Form einer Vielzahl von nebeneinander und übereinander angeordneten, vorzugsweise aufgeblasenen, gewölbten Taschen, die miteinander in Verbindung stehen und durch die das Heizmedium fließt. Vorteilhafterweise ist die Heizung derart ausgerichtet, dass sie insbesondere, wie aus Fig. 4 hervorgeht, in Flussrichtung des Heizmediums einer gewölbten Tasche eine Verbindungsstelle 25 folgt. Der Pfeil in Fig. 4 zeigt die bevorzugte Flussrichtung des Heizmediums. Somit entstehen in der Heizfläche eine sehr hohe Turbulenz des Heizmediums und ein hoher Wärmeübergangskoeffizient auf der Heizmittelseite. Die Stärke d2 der Heizfläche kann beispielsweise 0,4 bis 2 mm betragen. D1 kann in einem Bereich von 3 bis 10 mm liegen.

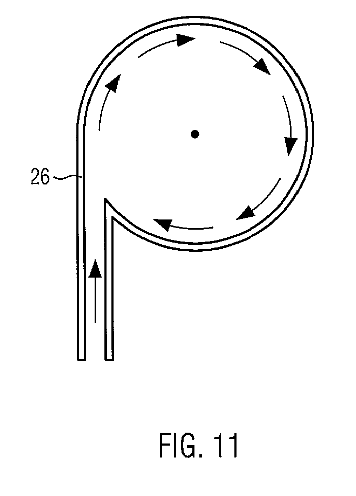

Die Heizung weist einen Zulauf 27 für das Heizmedium und einen Ablauf 28 für das Heizmedium auf. Die Vorrichtung weist einen Tangentialeinlass 26 auf, über den Würze in die Würzepfanne 1 auf die Heizfläche geleitet werden kann. Fig. 11 zeigt grob schematisch einen entsprechenden Tangentialeinlass 26, über den die Würze im wesentlichen tangential zur Innenwandung der Zargenheizung, also zur Heizfläche, eingeleitet werden kann, derart, dass die Würze entlang der hohlzylindrischen Innenkontur der Zargenheizung bzw. der Würzepfanne geleitet wird und insbesondere auf eine Kreisbahn gezwungen wird. Es ergibt sich eine abwärts gerichtete Rotationsbewegung der Würze. Die Würze rotiert also um die Mittelachse M der Würzepfanne 1, so dass auf ein Rührwerk verzichtet werden kann. Die Würze bewegt sich dabei an der Innenwandung der Zargenheizung mit einer Geschwindigkeit ≥ 0,5 m/s, vorzugsweise > 2 m/s, bis zu 7 m/s.

Weiter weist die Vorrichtung, wie auch in Zusammenhang mit dem ersten Ausführungsbeispiel beschrieben, Entnahmestellen 5a, b für Würze aus der Würzepfanne 1 auf, eine Würzeumlaufpumpe 4 sowie eine zweite Heizeinrichtung 3, die grobschematisch dargestellt ist. Die zweite Heizeinrichtung 3 ist hier der Läuterwürzeerhitzer. Zum Umwälzen kann also die Würze aus der Würzepfanne 1 wie bei dem vorherigen Ausführungsbeispiel über den Leitungsabschnitt 7a, 7c, 7d, 7e und 7g über die zweite Heizeinrichtung 3 erhitzt werden, und der Würzepfanne 1 wieder zugeführt werden, hier über die Steigleitung 29 und den entsprechenden Verteiler. Über eine Ventilanordnung, hier die Stellventile 30, 31, bzw. Regelklappen, kann der Volumenstrom in der Zirkulationsleitung 7a, b, c, d, e, g und der Leitung 7h eingestellt werden. Auch hier kann wie bei dem vorherigen Ausführungsbeispiel, die aus der Würzepfanne 1 entnommene Würze entweder über die zweite Heizeinrichtung 3 der Würzepfanne 1 zugeführt werden oder aber über die Leitung 7h der erste Heizeinrichtung 2, hier der Zargenheizung zurückgeleitet werden. Dabei wird bei diesem Ausführungsbeispiel die Zargenheizung über den Tangentialeinlass mit Würze angeströmt.

Der Tangentialeinlass 26 befindet sich bevorzugt am oberen Ende der Zargenheizung 2. Wenn ein Teilstrom der zu kochenden Würze vor der zweiten Heizeinrichtung 3 über die Leitung 7h über den tangentialen Einlauf 26 in die Würzepfanne 1 rückgeführt wird, ergibt sich der Vorteil, dass die Würze im Verhältnis zur Temperatur der Würze nach dem Auslass 10 der zweiten Heizeinrichtung 3 kälter über die Heizfläche der Zargenheizung 2 geführt wird, d. h. dass die Temperaturdifferenz zwischen Würze und Heizmedium größer ist, was zu einem besseren Wärmeübergang beziehungsweise höheren Wärmestrom führt. Durch die tangentiale Anströmung der Heizfläche und die daraus resultierende Rotationsbewegung der Würze ergibt sich eine verbesserte Anströmung der Heizfläche, ein reduziertes Fouling, somit eine Erhöhung des k-Werts der Heizfläche und letztendlich ein erhöhter Wärmestrom. Auf ein Rührwerk kann verzichtet werden. Wenn ein Rührwerk verwendet wird, soll die Anströmung in Rührwerkbewegungsrichtung erfolgen. Zusätzlich zu der Zargenheizung 2 kann noch eine Bodenheizung, die ebenfalls Unebenheiten, die nach innen gerichtet sind und die, wie im Zusammenhang mit der Heizung 2 beschrieben wurde, aufgebaut sind, vorgesehen sein. Bevorzugt ist ganz allgemein keine Bodenheizung vorgesehen und stattdessen die zweite Heizeinrichtung 3, da die Bodenheizung eher zu Fouling neigt.

Es ist auch möglich, dass die von der zweiten Heizeinrichtung erwärmte Würze durch Schalten entsprechender nicht dargestellter Ventile über die gepunktete Leitung ebenfalls wieder über den Tangentialeinlass rückgeführt wird. Bevorzugt ist der Würzestrom jedoch, wie bereits erläutert, aufgeteilt und wird zum Einen über die Leitung 7e und zum Anderen über die Leitung 7h rückgeführt.

Wenn der Teilstrom der zu kochenden Würze, der aus der Würzpfanne 1 entnommen wird und über die Leitung 7 auf die erste Heizeinrichtung, hier die Zargenheizung geleitet wird, gibt es eine höhere Temperaturdifferenz zwischen Würze und Heizmedium in der Zargenheizung. Daraus folgt ein besserer Wärmeübergang beziehungsweise ein höherer Wärmestrom.

Wenn auch nicht dargestellt kann die Würze am Anfang des Prozesses entweder über eine separate Öffnung oder den Tangentialeinlass eingeleitet werden. Die fertige Würze kann über eine hier nicht dargestellte Leitung abgeleitet werden.

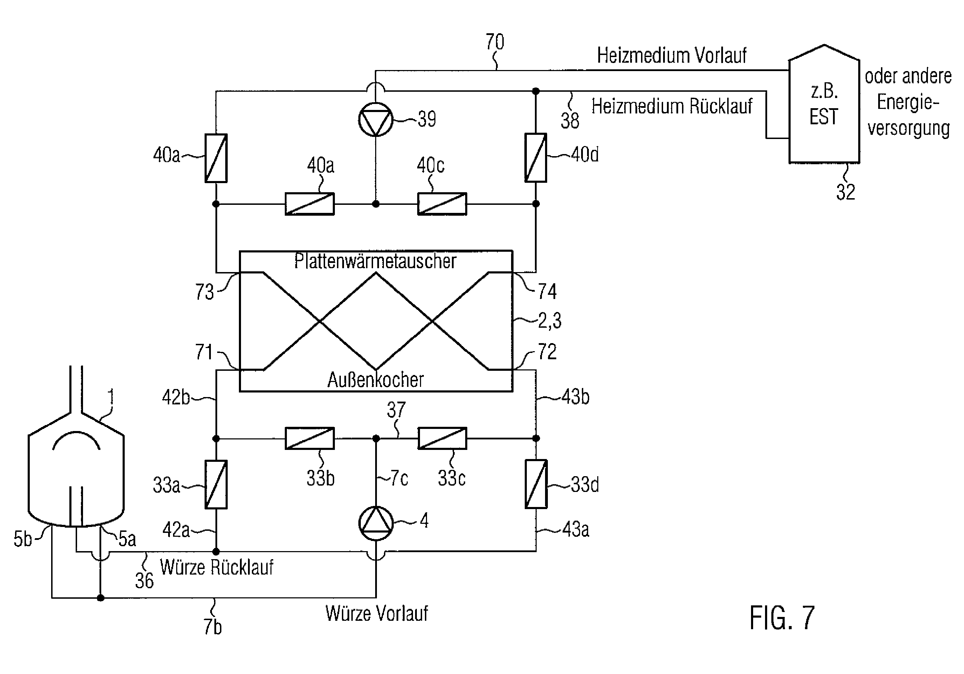

Fig. 7 zeigt eine weitere Ausführungsform gemäß der vorliegenden Erfindung, wobei als erste Heizeinrichtung 2 ein Plattenwärmetauscher 2 verwendet wird, vorzugsweise ein Freistromplattenwärmetauscher. In diesem Ausführungsbeispiel wird der Plattenwärmetauscher 2 als Außenkocher verwendet. Die in Fig. 7 gezeigte Vorrichtung ist insbesondere in Kombination mit den vorherigen Ausführungsbeispielen, d. h. mit einer zweiten Heizvorrichtung insbesondere in Form eines Läuterwürzeerhitzers vorzugsweise mit niedrigen Heizmitteltemperaturen von ≤ 120 °C, insbesondere 105 bis 120 °C vorteilhaft, kann jedoch auch unabhängig und ohne die vorgenannten Ausführungsbeispiele und unabhängig von den vorgenannten Temperaturen vorteilhaft eingesetzt werden. Einfachheitshalber ist die optional vorgesehene Zirkulationsleitung, die im Zusammenhang mit den vorhergehenden Ausführungsbeispielen beschrieben wurde und über die der Würzpfanne 1 Würze entnommen werden kann und die mit dem Läuterwürzeerhitzer 3 verbunden ist, derart, dass zumindest ein Teilstrom der entnommenen Würze in den Läuterwürzeerhitzer zum Erwärmen geleitet und dann in die Würzepfanne zurückgeleitet werden kann, nicht gezeigt.

Plattenwärmetauscher brennen bei zu hohen Heizmedientemperaturen schnell an und bringen dann nicht mehr die gewünschte Leistung. Vor allem bei der Verwendung von Hopfenpellets (Typ 90, hoher Feststoffanteil) kommt es auch bei geringen Heizmitteltemperaturen von beispielsweise ≤ 120 °C zu einem Verlegen der Platten, was den Würzedurchsatz deutlich reduziert und eine Zwischenreinigung nach nur wenigen Suden erfordert. Der Einsatz von Hopfenpellets mit hohem Feststoffanteil oder der Einsatz anderer Produkte mit hohem Feststoffanteil gestaltet sich somit schwierig, da es zu starken Verstopfungserscheinungen kommt. Wenn der Plattenwärmetauscher 2 immer in derselben Strömungsrichtung gefahren wird, können sich Feststoffpartikel von Sud zu Sud immer mehr festsetzen und die freie Durchgangsfläche und somit auch die Heizfläche reduzieren, wodurch die Heizleistung abnimmt und eine Zwischenreinigung notwendig wird. Aus diesem Grund ist wie nachfolgend näher erläutert, der als erste Heizeinrichtung eingesetzte Plattenwärmetauscher 2 derart ausgebildet, dass er in zwei Strömungsrichtungen mit Würze beschickbar ist, wobei in diesem Ausführungsbeispiel auch das Heizmedium in zwei Strömungsrichtungen strömen kann

Wie aus Fig. 7 hervorgeht, weist die Würzepfanne 1 Entnahmestellen 5a, b auf, an denen Würze zum Umwälzen und Erhitzen entnommen wird. Über die Leitung 7b und die Würzeumwälzpumpe 4 kann Würze zum Plattenwärmetauscher 2 gepumpt werden. Von der Würzerücklaufleitung 36 führen zwei parallele Leitungen, einmal die Leitung 42a, b und dann die Leitung 43a, b zu den jeweiligen Anschlüssen 71 und 72 des Plattenwärmetauschers. In den Leitungsabschnitten 42a und 43a sind jeweils die Ventile 33a und 33d angeordnet. Die beiden parallelen Leitungen 42a, 42b und 43a, 43b verbindet die Leitung 37. Die Vorlaufleitung 7c mündet in die Leitung 37. Zwischen Leitung 7c und den Leitungen 42b und 43b sind jeweils die entsprechenden Ventile 33b und 33c angeordnet. Die Leitung 37 verbindet die Leitungen 42a, b und 43a, b hinter den Ventilen 33a, 33d (in Richtung Plattenwärmetauscher betrachtet).

Bei geschlossenem Ventil 33b und 33d und geöffnetem Ventil 33c kann die Würze dem Anschluss 72 zugeleitet werden und über den Anschluss 71 und geöffnetem Ventil 33a dem Würzerücklauf 36 zugeführt werden. Bei geschlossenen Ventilen 33a, 33c und geöffnetem Ventil 33b kann die Würze dem Zulauf 71 des Plattenwärmetauschers 2 zugeführt werden und über den Ablauf 72 bei geöffnetem Ventil 33d in den Würzerücklauf 36 geleitet werden kann. Eine entsprechende Ventilanordnung ist auch auf der Heizmediumseite vorgesehen, so dass das heiße Heizmedium über die Leitung 70 und die Pumpe 39 entweder den Anschluss 73 oder 74 über eine entsprechende Schaltung der Ventile 40a, b, c, d zuleiten kann. Der Heizmediumrücklauf über die Leitung 38 kann dann über den entsprechend anderen Anschluss erfolgen.

Wenn auch in den Figuren nicht dargestellt, können die Würzeventile 33a, 33b, 33c, 33d sowie die Heizmediumventile 40a, 40b, 40c, 40d zumindest zum Teil als Regelventile oder Regelklappen ausgeprägt sein. Dies ermöglicht ein sanftes Umschalten der Strömungsrichtung auch während eines Prozesses, beispielsweise eines Kochprozesses. Wenn lediglich Absperrklappen verbaut sind, muss vor dem Strömungsrichtungswechsel zunächst der Durchfluss zum Erliegen kommen, bevor der Strömungsrichtungswechsel erfolgen kann, um Schäden am System zu verhindern. Durch Regelklappen ist es möglich, den Fluss auf einen Bypass 37, 42a umzulenken, ohne die Würzeumwälzpumpe 4 abschalten zu müssen. Wenn die Würze vom Einlauf 72 zum Auslauf 71 durch den Wärmetauscher 2 strömt erfolgt der Strömungsrichtungswechsel derart, dass zu-

nächst das Ventil 33c langsam geschlossen und gleichzeitig das Ventil 33b langsam geöffnet wird. Somit wird bei geschlossenem Ventil 33a die Würzezirkulation sukzessive vom Wärmetauscher 2 weg zum Würzerücklauf 36 über das Ventil 33b und 33a gelenkt, wodurch der Wärmetauscher 2 vollständig entlastet wird. D.h. die Würze aus dem Vorlauf 7c wird über eine Bypassleitung 37,42a am Plattenwärmetauscher vorbeigeleitet. Sobald das Ventil 33c komplett geschlossen und das Ventil 33 b komplett geöffnet ist, wird das Ventil 33a langsam geschlossen und zeitgleich das Ventil 33 d langsam geöffnet. Somit wird die Würzezirkulation wiederum sukzessive vom Bypass weg zum Wärmetauscher 2 verlagert. Wenn das Ventil 33a komplett geschlossen und das Ventil 33d komplett geöffnet ist, ist der Stömungsrichtungswechsel erfolgt und der Kochprozess kann analog weitergeführt werden. Analog kann dies auch auf der Seite des Heizmediums stattfinden. Dies kann zeitgleich oder auch zeitversetzt stattfinden. Analog kann die Stömungsrichtung auch wieder in die andere Richtung umgekehrt werden.

Der Heizmediumvorlauf und Rücklauf ist beispielsweise mit einem Energiespeichertank 32 (EST) oder einer anderen Energieversorgung verbunden. Die Strömungsrichtung der Würze kann während des Kochens eines Sudes ein oder mehrmals gewechselt werden, indem die Ventilanordnung entsprechend angesteuert wird. Es ist auch möglich, die Strömungsrichtung zwischen dem Kochen aufeinanderfolgender Sude zu ändern. Beim Wechseln der Strömungsrichtung der Würze durch den Plattenwärmetauscher 2 ist es vorteilhaft, wenn auch die Strömungsrichtung des Heizmediums gleichzeitig gewechselt wird.

Durch Wechseln der Strömungsrichtung kann das Festsetzen von Feststoffpartikeln reduziert werden, so dass der Plattenwärmetauscher 2 nicht so schnell zusetzt und die Vorrichtung nicht so häufig gereinigt werden muss. Auch die Richtung des Heizmediums kann dann jeweils entsprechend gewechselt werden. Auch die niedrige Heizmediumtemperatur trägt dazu bei, dass der Plattenwärmetauscher 2 nicht anbrennt. Der Plattenwärmetauscher 2 wurde hier im Zusammenhang mit der ersten Wärmetauschereinrichtung beschrieben, ist jedoch auch als zweite Wärmetauschereinrichtung geeignet.

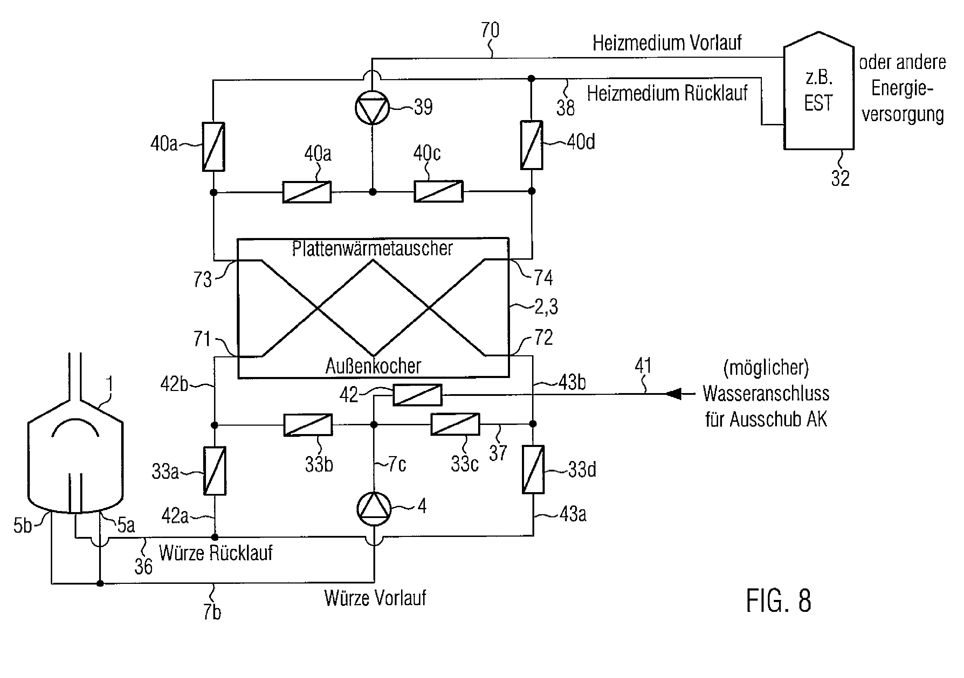

Fig. 8 zeigt das in Fig. 7 gezeigte Ausführungsbeispiel, zeigt jedoch noch einen zusätzlichen Wasseranschluss 41 mit einem Ventil 42, hier einem Absperrventil als eine Möglichkeit zum Ausschieben des Plattenwärmetauschers mit Wasser. Die Leitung 41 führt in die Leitung 37. Über die Leitung 41 kann bei geöffnetem Ventil 42 Wasser durch Schalten der entsprechenden Ventile 33a bis d entweder über den Anschluss 71 oder den Anschluss 72 in den Plattenwärmetauscher geleitet werden und dann über den entsprechend anderen Anschluss in die Würzepfanne 1 über den Würzerücklauf geleitet werden, wodurch die Würze aus dem Plattenwärmetauscher ausgeschoben wird. Die ausgeschobene Würze sowie das Wasser zum Ausschieben kann z.B. über eine Entnahmeöffnung in der Würzepfanne 1 abgelassen werden.

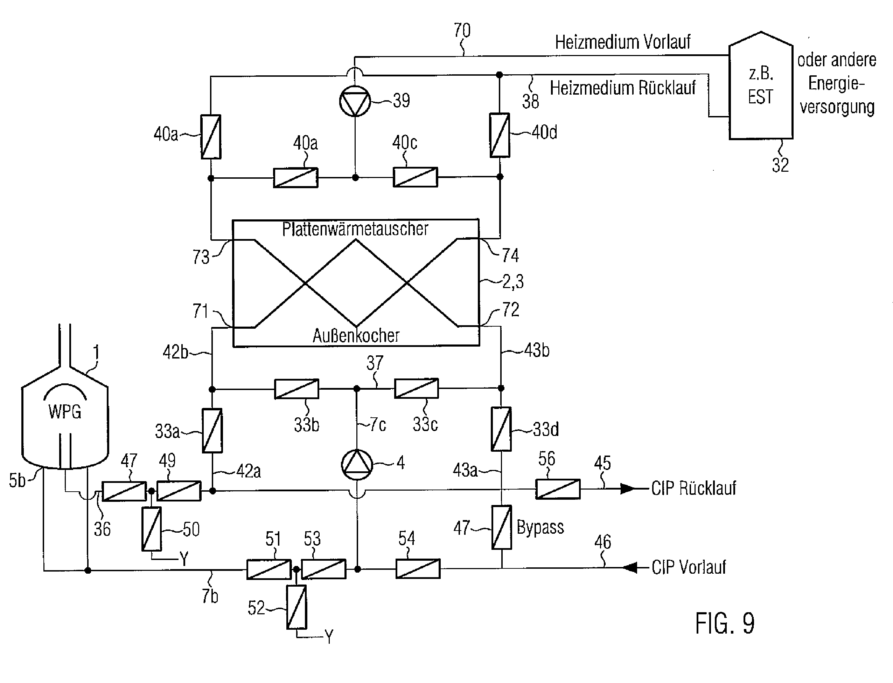

Fig. 9 entspricht den vorherigen Ausführungsbeispielen, wobei einfachheitshalber die Ausschubleitung 41 nicht gezeigt ist. Fig. 9 zeigt Anschlüsse für eine CIP-Reinigung. Dabei ist die Würzerücklaufleitung 36 mit einem Anschluss 45 für einen CIP-Rücklauf verbunden und die Würzevorlaufleitung mit einem Anschluss 46 für den CIP-Vorlauf. Über eine Ventileinrichtung, beispielsweise Ventile 48, 49 kann der CIP-Rücklauf von der Würzepfanne 1 getrennt werden. Zwischen den Ventilen 48, 49 kann über ein Ventil 50 beispielsweise Reinigungslösung in den Ablauf abgelassen werden. Über eine Ventileinrichtung z.B. Ventile 51, 53 kann der CIP-Vorlauf von der Würzepfanne 1 getrennt werden, wobei auch hier zwischen den Ventilen 51 und 53 über das Ventil 52 Reinigungsflüssigkeit in den Ablauf abgeleitet werden kann. Der CIP-Vorlauf ist über ein Ventil 54 vom Würzevorlauf getrennt. Der CIP Rücklauf ist über das Ventil 56 vom Würzerücklauf getrennt. CIP-Rücklauf und CIP-Vorlauf sind über einen Bypass 47, in dem ein entsprechendes Bypass-Ventil geschaltet werden kann, verbunden. Diese Anordnung ermöglicht, dass bei entsprechender Schaltung der Ventile eine separate Außenkocherzwischenreinigung erfolgen kann, selbst während sich Produkt in der Würzepfanne 1 befindet, da dann zumindest ein Ventil 48 oder 49 bzw. 51 oder 53 geschlossen werden kann. Die Anordnung ermöglicht jedoch auch ebenfalls, dass CIP-Medium in die Würzepfanne 1 vorgelegt werden kann und zwischen der ersten Heizeinrichtung 2, insbesondere den Plattenwärmetauscher und der Würzepfanne 1 im Kreislauf zirkulieren kann, bevor es abgeführt wird. Dabei ist es möglich, wie im Zusammenhang mit der Würze beschrieben, dass sich die Strömungsrichtung des CIP-Reinigungsmediums im Plattenwärmetauscher 2 ändert und zwar durch Schalten der entsprechenden Ventile.

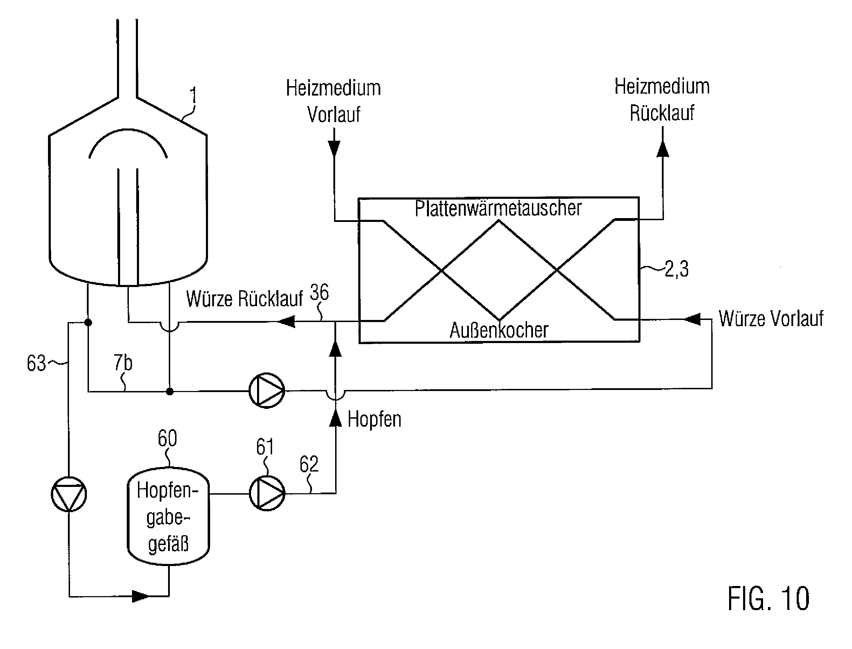

Fig. 10 betrifft die Ausführungsbeispiele wie sie in Fig. 7 bis 9 gezeigt wurden, wobei einfachheitshalber die Einrichtung zum Umschalten der Strömungsrichtung der Würze und die Einrichtung zum Umschalten der Strömungsrichtung des Heizmediums im Plattenwärmetauscher nicht gezeigt sind, ebenso wie die CIP-Einrichtung und der Wasseranschluss für den Ausschub nicht gezeigt sind. Die Vorrichtung zeigt nun das Hopfendosagegefäß 60, das einfachheitshalber in allen anderen Ausführungsbeispielen nicht gezeigt wurde jedoch auch in den anderen Ausführungsbeispielen entsprechend integriert werden kann. Das Hopfendosagegefäß 60, d.h. die Einrichtung zum Zudosieren von Hopfen ist derart angeordnet, dass der Hopfen in Strömungsrichtung nach dem Plattenwärmetauscher, also im Würzerücklauf 36 hier z. B. über Pumpe 61 und Leitung 62 zudosiert wird. Ein Zulauf 63 zum Hopfendosagegefäß 60 erfolgt über Leitung 63, die von der Würzevorlaufleitung 7b abzweigt. Dadurch, dass der vorgelöste Hopfen in die Würzeleitung 36 nach dem Plattenwärmetauscher 2 zugeführt wird, wird die höhere Temperatur der Würze für eine bessere Isomerisierung genutzt. Die Würze steigt dann über das Würzesteigrohr zur Würzeoberfläche. Die Verweildauer des Hopfens in der Pfanne bis zum ersten Eintritt in den Plattenwärmetauscher 2 wird somit deutlich verlängert. Somit wird die Lösung des Hopfens erhöht und das Verlegen des Plattenwärmetauschers minimiert. Bei wechselnder Strömungsrichtung der Würze durch den Plattenwärmetauscher ist ein weiterer Anschluss (nicht dargestellt) vorgesehen, der es ebenfalls ermöglicht, den Hopfen in den entsprechenden Rücklauf zur Würzepfanne 1 durch Schalten entsprechender Ventile zuzudosieren.

Durch die vorliegende Erfindung wird die Verwendung eines Plattenwärmetauschers als Außenkocher auch bei erhöhtem Feststoffanteil der Würze möglich. Die Standzeit des Außenkochers kann verlängert werden. Eine ideale Reinigungswirkung und ein maximaler k-Wert können erzielt werden. Die Verlegung des Plattenwärmetauschers durch Hopfenfeststoffe kann minimiert werden. Dennoch können sämtliche Vorteile des Einsatzes eines Plattenwärmetauschers als Außenkocher genutzt werden, wie beispielsweise geringere Investitionskosten, geringerer Platzbedarf, vereinfachte Wartung, höherer k-Wert, effizienter Einsatz von Niedertemperaturheizmedien ($\leq$ 120 °C, vorzugsweise $\leq$ 110 °C).

Der in Zusammenhang mit den Figuren 7-10 beschriebene Plattenwärmetauscher kann auch als zweite Heizeinrichtung verwendet werden.

Wenn in dieser Erfindung die Rede vom Würzekochen ist, so ist darunter auch ein Würzeheißhalten beinhaltet. Unter Würzeheißhalten versteht man das Halten der Temperatur der Würze in der Würzepfanne auf einem bestimmten Temperaturniveau, vorzugsweise knapp unterhalb der Siedetemperatur, in der Regel 85 bis 99°C.

**Patentansprüche**

1. Verfahren zum Würzekochen, wobei die Würze mit einer ersten Heizeinrichtung (2) erhitzt wird, **dadurch gekennzeichnet, dass** während des Würzekochens die Würze zusätzlich durch einen Läuterwürzeerhitzer (3) erhitzt wird.

2. Verfahren nach Anspruch 1, **dadurch gekennzeichnet, dass** das Heizmedium zum Beheizen der ersten Heizeinrichtung (2) eine Temperatur $\leq$ 120 °C, vorzugsweise eine Temperatur in einem Bereich von 105 °C bis 120 °C aufweist, und insbesondere Heißwasser als Heizmedium verwendet wird.

3. Verfahren nach Anspruch 1 oder 2, **dadurch gekennzeichnet, dass** Würze der Würzepfanne (1) entnommen wird und zumindest ein erster Teilstrom dem Läuterwürzeerhitzer (3) zugeführt und erhitzt wird und dann entweder direkt und/oder über die erste Heizeinrichtung (2) in die Würzepfanne (1) zurückgeführt wird.

4. Vorrichtung zum Würzekochen insbesondere zum Durchführen des Verfahrens nach mindestens einem der Ansprüche 1 bis 3 mit
einer Würzepfanne (1),
einer ersten Heizeinrichtung (2) zum Erhitzen der Würze,
einem Läuterwürzeerhitzer (3), **gekennzeichnet durch**
eine Zirkulationsleitung (7a-g; 7a-f, h) über die der Würzepfanne Würze entnommen werden kann und die
mit dem Läuterwürzeerhitzer (3) verbunden ist, derart, dass zumindest ein Teilstrom der entnommenen Würze in den Läuterwürzeerhitzer (3) zum Erwärmen geleitet und dann in die Würzepfanne (1) zurückgeleitet werden kann.

5. Vorrichtung nach Anspruch 4, **dadurch gekennzeichnet, dass** die Zirkulationsleitung (7a-g; 7a-f, h) derart ausgebildet ist, dass die vom Läuterwürzeerhitzer (3) erhitzte Würze direkt der Würzepfanne (1) und/oder über die erste Heizeinrichtung (2) in die Würzepfanne (1) zurückgeleitet wird.

6. Vorrichtung nach mindestens einem der Ansprüche 4 bis 5, **dadurch gekennzeichnet, dass** die Vorrichtung eine Pumpe (4) aufweist, die die Würze durch die Zirkulationsleitung (7a-g; 7a-f,h) zum Läuterwürzeerhitzer (3) fördert, wobei vorzugsweise die Pumpe über die die Zirkulationsleitung (7a-g; 7a-f,h) mit einem Ein- oder Auslauf des Läuterwürzeerhitzers (3) verbunden ist.

7. Vorrichtung nach mindestens einem der Ansprüche 4 bis 6, **dadurch gekennzeichnet, dass** eine Ventilanordnung (8, 31, 32) in der Zirkulationsleitung (7a-g; 7a-f,h) vorgesehen ist, über die die Würze entweder zum Läuterwürzeerhitzer (3) geleitet werden kann und/oder zur ersten Heizeinrichtung (2).

8. Vorrichtung nach mindestens einem der Ansprüche 4 bis 7, **dadurch gekennzeichnet, dass** die erste Heizeinrichtung (2) zumindest eine Heizung aus folgender Gruppe ist: Innenkocherheizung, Außenkocherheizung, Bodenheizung, Zargenheizung.

9. Vorrichtung nach mindestens einem der Ansprüche 1 bis 8, **dadurch gekennzeichnet, dass** die erste Heizeinrichtung (2) eine Zargenheizung, insbesondere mit nach innen gewandten Unebenheiten ist, und die Vorrichtung weiter einen Tangentialeinlass (26) aufweist, über den die Würze im Wesentlichen tangential auf die Innenwandung der Zargenheizung (2) eingebracht werden kann, wobei vorzugsweise der Tangentialeinlass (26) mit der Zirkulationsleitung verbunden ist und/oder mit einer Leitung (7a, 7b, 7c, 7h) die Würze aus der Würzepfanne (1) entnimmt und über die Würzeumwälzpumpe (4) vor dem Läuterwürzeerhitzer der ersten Heizeinrichtung (2) rückführt.

10. Vorrichtung nach mindestens einem der Ansprüche 4 bis 9, **dadurch gekennzeichnet, dass** die Würzepfanne (1) ein Rührwerk aufweist.

11. Vorrichtung nach mindestens einem der Ansprüche 4 bis 10, **dadurch gekennzeichnet, dass** in der Zirkulationsleitung (7a-g; 7a-f,h) eine zweite Ventilanordnung (30a-d) vorgesehen ist, derart, dass der Läuterwürzeerhitzer in zwei Strömungsrichtungen mit Würze beschickbar ist und vorzugsweise der Läuterwürzeerhitzer über eine entsprechende Ventilanordnung auch mit heißem Heizmedium in zwei Strömungsrichtungen beschickbar ist.

12. Vorrichtung zum Würzekochen mit einer Würzepfanne (1) und einer ersten Heizeinrichtung (2), insbesondere nach Anspruch 4, **dadurch gekennzeichnet, dass** die erste Heizeinrichtung (2) ein Plattenwärmetauscher ist.

13. Vorrichtung nach mindestens Anspruch 12, **dadurch gekennzeichnet, dass** der Plattenwärmetauscher (2) in zwei Strömungsrichtungen mit Würze beschickbar ist und vorzugsweise auch mit Heizmedium in zwei Strömungsrichtungen beschickbar ist.

14. Vorrichtung nach Anspruch 12 oder 13, **dadurch gekennzeichnet, dass** eine Einrichtung zum Zudosieren von Hopfen (60) derart angeordnet ist, dass der Hopfen in Strömungsrichtung nach dem Plattenwärmetauscher (2) zugegeben wird.

15. Vorrichtung nach mindestens einem der Ansprüche 4 bis 14, **dadurch gekennzeichnet, dass** die Vorrichtung Anschlüsse (46, 45) für eine CIP-Reinigung aufweist, wobei insbesondere CIP-Medium in die Würzepfanne (1) vorgelegt werden kann und zwischen der ersten Heizeinrichtung (2), insbesondere dem Plattenwärmetauscher und der Würzepfanne (1) im Kreislauf zirkulieren kann, bevor es abgeführt wird, oder eine separate Außenkocherzwischenreinigung des Plattenwärmetauschers erfolgen kann.

16. Vorrichtung nach mindestens einem der Ansprüche 4 bis 15, **dadurch gekennzeichnet, dass**, zum Umschalten der Strömungsrichtung durch den Plattenwärmetauscher (2,3) mehrere Regelventile und/oder Regelklappen (33a-d;40a-d) angeordnet sind, insbesondere derart, dass beim Umschalten der Volumenstrom der Würze oder des Heizmediums, der zu einem ersten Anschluss (72,73) des Plattenwärmetauschers geleitet wird sukzessive reduziert werden kann bis er zum Erliegen kommt und der Volumenstrom statt dessen sukzessive über eine Bypassleitung (37,42a) geleitet werden kann und anschließend der Volumenstrom in der Bypassleitung (37,42a) sukzessive reduziert werden kann bis er zum Erliegen kommt und stattdessen der Volumenstrom sukzessive zum anderen Anschluss (71,74) des Plattenwärmetauschers geleitet werden kann.

FIG. 1

FIG. 2

FIG. 3

FIG. 4

FIG. 5

FIG. 6

FIG. 7

EP 3 020 795 A1

FIG. 8

EP 3 020 795 A1

FIG. 9

FIG. 10

26

FIG. 11

Europäisches
Patentamt

European
Patent Office

Office européen
des brevets

# EUROPÄISCHER RECHERCHENBERICHT

**Nummer der Anmeldung**

EP 15 19 2246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 086409 A1 (KRONES AG [DE]) 16. Mai 2013 (2013-05-16) * Absätze [0027], [0034]; Ansprüche 1,15,19; Abbildung 2 * ----- | 1-16 | INV. C12C7/20 C12C7/22 C12C13/08 |
| X | DE 10 2007 060391 A1 (KRONES AG [DE]) 18. Juni 2009 (2009-06-18) * Absätze [0027], [0040], [0042]; Anspruch 1; Abbildungen 1,5 * ----- | 1-16 | |
| X | EP 1 862 531 A1 (KRONES AG [DE]) 5. Dezember 2007 (2007-12-05) * Absätze [0012], [0026]; Ansprüche 1,13; Abbildung 5 * ----- | 1-16 | |
| A | WO 2011/076410 A1 (KRONES AG [DE]; KAMMERLOHER HELMUT [DE]) 30. Juni 2011 (2011-06-30) * Anspruch 1; Abbildung 1 * ----- | 1-16 | |
| A | EP 0 285 009 A2 (STEINECKER MASCHF ANTON [DE]) 5. Oktober 1988 (1988-10-05) * Anspruch 1; Abbildung 1 * ----- | 1-16 | **RECHERCHIERTE SACHGEBIETE (IPC)** |
| A | DE 10 2010 041956 A1 (KRONES AG [DE]) 5. April 2012 (2012-04-05) * Anspruch 15; Abbildungen 3,4 * ----- | 1-16 | C12C |
| A | DE 101 39 427 A1 (HRCH HUPPMANN GMBH [DE]) 6. März 2003 (2003-03-06) * das ganze Dokument * ----- | 1-16 | |
| A | DE 43 04 975 C1 (LENZ BERNHARD [DE]; LENZ AUGUST [DE]) 3. März 1994 (1994-03-03) * das ganze Dokument * ----- | 1-16 | |

Der vorliegende Recherchenbericht wurde für alle Patentansprüche erstellt

| Recherchenort | Abschlußdatum der Recherche | Prüfer |
|---|---|---|
| Den Haag | 4. April 2016 | Diller, Reinhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 19 2246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2016

| Im Recherchenbericht angeführtes Patentdokument | Datum der Veröffentlichung | Mitglied(er) der Patentfamilie | Datum der Veröffentlichung |
|---|---|---|---|
| DE 102011086409 A1 | 16-05-2013 | KEINE | |
| DE 102007060391 A1 | 18-06-2009 | BR PI0819427 A2 | 05-05-2015 |
| | | CA 2708029 A1 | 25-06-2009 |
| | | CN 101896597 A | 24-11-2010 |
| | | DE 102007060391 A1 | 18-06-2009 |
| | | DK 2220207 T3 | 17-12-2012 |
| | | EP 2220207 A1 | 25-08-2010 |
| | | US 2010303984 A1 | 02-12-2010 |
| | | WO 2009077042 A1 | 25-06-2009 |
| EP 1862531 A1 | 05-12-2007 | AT 406434 T | 15-09-2008 |
| | | CA 2626088 A1 | 29-11-2007 |
| | | CN 101443440 A | 27-05-2009 |
| | | EP 1862531 A1 | 05-12-2007 |
| | | ES 2312063 T3 | 16-02-2009 |
| | | JP 5009365 B2 | 22-08-2012 |
| | | JP 2009537157 A | 29-10-2009 |
| | | US 2009191321 A1 | 30-07-2009 |
| | | WO 2007134657 A1 | 29-11-2007 |
| WO 2011076410 A1 | 30-06-2011 | CA 2784812 A1 | 30-06-2011 |
| | | CN 102791846 A | 21-11-2012 |
| | | DE 102009055300 A1 | 30-06-2011 |
| | | DK 2516614 T3 | 13-04-2015 |
| | | EP 2516614 A1 | 31-10-2012 |
| | | ES 2530452 T3 | 03-03-2015 |
| | | JP 5761619 B2 | 12-08-2015 |
| | | JP 2013515466 A | 09-05-2013 |
| | | US 2013000863 A1 | 03-01-2013 |
| | | WO 2011076410 A1 | 30-06-2011 |
| EP 0285009 A2 | 05-10-1988 | DE 3711251 A1 | 13-10-1988 |
| | | EP 0285009 A2 | 05-10-1988 |
| | | JP S63279780 A | 16-11-1988 |
| DE 102010041956 A1 | 05-04-2012 | CN 103228778 A | 31-07-2013 |
| | | DE 102010041956 A1 | 05-04-2012 |
| | | DK 2625260 T3 | 09-03-2015 |
| | | EP 2625260 A1 | 14-08-2013 |
| | | ES 2526896 T3 | 16-01-2015 |
| | | WO 2012045440 A1 | 12-04-2012 |
| DE 10139427 A1 | 06-03-2003 | KEINE | |
| DE 4304975 C1 | 03-03-1994 | DE 4304975 C1 | 03-03-1994 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 15 19 2246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2016

| Im Recherchenbericht angeführtes Patentdokument | Datum der Veröffentlichung | Mitglied(er) der Patentfamilie | Datum der Veröffentlichung |
|---|---|---|---|
| | | EP 0611819 A2 | 24-08-1994 |
| | | JP H0795872 A | 11-04-1995 |

EPO FORM P0461

Für nähere Einzelheiten zu diesem Anhang : siehe Amtsblatt des Europäischen Patentamts, Nr.12/82